# NEUE EUROPÄISCHE PATENTSCHRIFT

(11) **EP 2 153 149 B2**
(45) Veröffentlichungstag und Bekanntmachung des Hinweises auf die Entscheidung über den Einspruch: **28.11.2018**
(45) Hinweis auf die Patenterteilung: 20.07.2011
(21) Anmeldenummer: 08759605.2
(22) Anmeldetag: 14.05.2008
(51) Int. Cl.: F25D 23/02

(54) **HAUSHALTSGERÄT**
DOMESTIC APPLIANCE
APPAREIL MÉNAGER

(30) Priorität: 23.05.2007 DE 202007007321 U
(43) Veröffentlichungstag der Anmeldung: 17.02.2010
(73) Patentinhaber: BSH Hausgeräte GmbH, 81739 München (DE)
(72) Erfinder: ARZOZ BARANDALLA, Jose Maria, E-31008 Pamplona (ES); BEGUIRISTAIN IGOA, Jose Angel, E-31820 Etxarri Aranatz (ES); SANCHO SANCHEZ, Ander, E-31014 Pamplona (ES)
(86) Internationale Anmeldenummer: PCT/EP2008/055927
(87) Internationale Veröffentlichungsnummer: WO 2008/141995

(56) Entgegenhaltungen:
- DE-A1- 10 208 061
- DE-B- 1 243 846
- DE-U1- 29 916 169
- GB-A- 1 508 582
- JP-A- 8 121 946
- US-A- 3 006 708
- US-A- 3 776 143
- US-A- 3 882 637
- US-A- 4 486 981
- US-A- 5 987 910
- US-A1- 2002 190 617
- US-A1- 2006 265 960
- US-B1- 6 192 630
- US-B1- 6 209 265

## Beschreibung

Die vorliegende Erfindung betrifft eine Tür für ein Haushaltsgerät, insbesondere ein Kühl- oder Gefriergerät, mit einer der Tür, die mit einer Außenwand, einer Innenwand, einem oberen und einem unteren Abschlusselement ausgestattet ist, die einen inneren Hohlraum der Tür begrenzen. Ein solches Haushaltsgerät ist zum Beispiel aus DE 103 02 797 A1 und aus DE 102 59 749 A1 bekannt.

Beim Ausschäumen des Hohlraums in der Tür übt das expandierende Schaummaterial Druck auf die Wände und die Abschlusselemente aus. Um zu verhindern, dass diese auseinandergetrieben werden und zwischen ihnen Schaum austritt, muss der Druck zumindest solange abgefangen werden, bis der Schaum abgebunden ist. Herkömmlicherweise geschieht dies, indem die oberen und unteren Ränder der Außenwand jeweils in eine Nut der Abschlusselemente eingesteckt werden, so dass eine Rippe des Abschlusselements, die die Nut nach außen begrenzt, den von innen her einwirkenden Druck abfängt. Eine Konsequenz dieser Bauweise ist, dass die Rippe stets über die Außenwand übersteht. Das Abschlusselement ist daher bei fertiger Tür deutlich sichtbar, und dort, wo die Außenwand in die Nut des Abschlusselements eintritt, bildet die Rippe Tür eine kleine Stufe, an der sich Schmutz sammeln kann.

Es ist daher sowohl unter ästhetischen Gesichtspunkten als auch im Hinblick auf die Reinigungsfreundlichkeit wünschenswert, das eingangs beschriebene Haushaltsgerät mit der Tür so weiter zu entwickeln, dass ein Austreten von Schaum zwischen der Außenwand und dem Abschlusselement sicher vermieden werden kann, ohne dass hierfür eine über die Außenwand vorstehende Rippe am Abschlusselement erforderlich ist.

Die Gebrauchsmusterschrift DE 29 916 169 U1 zeigt eine gewölbte Tür für Kühlschränke.

Die Patentschrift US 3,882,637 zeigt einen Kühlschrank mit einer Tür, wobei die Tür aus einem Außenpaneel und einer Rückwand besteht.

Die Offenlegungsschrift JP 08 121 946 zeigt eine Kühlschranktür mit Seitenflanken.

Die Offenlegungsschrift DE 10 208 061 A1 beschreibt ein Haushaltsgerät gemäß dem Oberbegriff des Anspruchs 1.

Die Patentschrift US 6,192,630 B1 zeigt einen Kühlschrank mit einer Tür, welche aus einem äußeren Paneel mit Seitenflanken und Randstegen und einer Innenwand gebildet ist. An seitlichen Verläufen der Tür sind Rohre vorgesehen, welche in Aussparungen der vier Ekken der Tür eingreifen, so dass die einzelnen Wände der Tür miteinander verbunden sind.

Ferner is aus der US 6,209,265 B1 eine Kühlschranktür mit einem Versteifungselement und einem abdeckelement bekannt.

Die Aufgabe wird erfindungsgemäß durch den Anspruch 1 gelöst Dieser Verriegelungskörper trägt wenigstens einen Teil der Kraft, die beim Ausschäumen auf die Außenwand einwirkt und verhindert so ein Abrücken der Außenwand von dem Abschlusselement nach vom, auch ohne dass eine vordere Rippe des Abschlusselements den Rand der Außenwand umgreift

Anstelle der äußeren Rippe ist eine innere Rippe an dem Abschlusselement vorgesehen, die sich entlang eines horizontalen Randes der Außenwand erstreckt. Auf diese Rippe ist die Außenwand durch das Verriegelungselement aufgespannt gehalten, so dass kein Schaum zwischen die Außenwand und die Rippe eindringen kann. Um eine gleichmäßige Andrückkraft der Außenwand über die gesamte Länge der Rippe hinweg zu erreichen, ist es ferner zweckmäßig, wenn Rippe und Außenwand bombiert sind.

Eine Verankerung des Verriegelungskörpers ist zweckmäßigerweise dadurch realisierbar, dass der Verriegelungskörper in einer zur Frontplatte parallelen Richtung mit einer Kontur des Abschlusselements formschlüssig zusammengesteckt ist. Eine beim Ausschäumen senkrecht zur Frontplatte wirkende Kraft kann den Verriegelungskörper dann nicht aus seinem Formschluss mit dem Abschlusselement lösen.

Der Formschluss kann zweckmäßigerweise herbeigeführt werden, indem eine - herkömmlicherweise meist an den Abschlusselementen vorhandene - Türlagerbuchse in eine Hülse des Verriegelungskörpers eingreift.

Eine solche Türlagerbuchse kann gleichzeitig als Einspritzöffnung zum Einspritzen von Isolationsmaterial in den inneren Hohlraum der Tür dienen, oder sie kann ein Entlüftungsventil aufnehmen, durch das beim Ausschäumen des Hohlraums Luft entweichen kann.

Des Weiteren kann die Kontur des Abschlusselements an der Außenwand und der Innenwand anliegende Rippen umfassen, zwischen die der Verriegelungskörper eingreift.

Um den Verriegelungskörper in seiner Position zu sichern, vor allem wenn er während des Zusammenbaus der Tür und vor dem Ausschäumen noch nicht durch den Isolierschaum in seiner Position gehalten ist, kann der Verriegelungskörper zweckmäßigerweise an dem Abschlusselement verrastet sein.

Als eine weitere Maßnahme zur Absicherung gegen das Austreten von Schaum kann die Außenwand entlang wenigstens eines ihrer horizontalen Ränder einen zur Innenwand hin abgewinkelten Steg tragen, und das Abschlusselement kann eine zur Außenseite der Tür hin offene Nut aufweisen, in die der Steg eingreift.

Um einerseits eine Klemmung des Stegs in der Nut zu gewährleisten und andererseits sicherzustellen, dass die zum Einschieben des Stegs in die Nut erforderliche Kraft nicht zu groß wird, ist zweckmäßigerweise die Nut breiter als der darin eingreifende Steg, und der Steg ist an von einer Seitenwand der Nut abstehenden Rippen geklemmt. Vorzugsweise ist die Seitenwand, die die Rippen trägt, die vom Schaum abgewandte unter den zwei Seitenwänden der Nut, so dass der Steg an der schaumseitigen Seitenwand eng anliegt und dort eine zusätzliche Dichtwirkung entfaltet.

Indem der Steg einen oberen beziehungsweise unteren Abschluss der Seitenwand bildet, ist die Möglichkeit geschaffen, das Abschlusselement hinter die Frontseite der Tür zurücktreten zu lassen, wodurch das Abschlusselement vor den Augen eines Betrachtes weitgehend verborgen ist und eine von eventuell Schmutz sammelnden Stufen freie Frontseite erhalten werden kann.

Für die Fixierung der Außenwand am Abschlusselement ist es zweckmäßig, wenn das Abschlusselement zwei außen an den Seitenflanken anliegende Laschen trägt. Diese hindern die Seitenflanken daran, sich auseinander zu biegen, wenn die Frontplatte der Außenwand unter Zugbelastung steht.

Vorzugsweise ist die Seitenflanke zwischen dem Verriegelungskörper und der Lasche fixiert, so dass sie weder nach außen noch ins Innere der Tür hinein ausweichen kann.

Um eine Zugspannung in der Außenwand aufzubauen und aufrecht zu erhalten, ist es nicht zuletzt vorteilhaft, wenn die Außenwand zwischen Seitenflanke und Randsteg jeweils eine hohle Rippe bildet und der Verriegelungskörper einen in den Hohlraum der Rippe eingreifenden Vorsprung aufweist.

Weitere Vorteile der Erfindung ergeben sich aus der nachfolgenden Beschreibung von Ausführungsbeispielen unter Bezugnahme auf die beigefügten Figuren. Es zeigen:
- Fig. 1: eine perspektivische Ansicht einer erfindungsgemäßen Tür;
- Fig. 2: eine perspektivische Ansicht der Außenwand der Tür;
- Fig. 3: ein Abschlusselement der Tür aus Fig. 1;
- Fig. 4: einen Schnitt durch das Abschlusselement der Fig. 3;
- Fig. 5: eine perspektivische Ansicht eines Verriegelungskörpers;
- Fig. 6: einen horizontalen Schnitt durch die Tür, der den Verriegelungskörper in einer Draufsicht zeigt;
- Fig. 7: einen Schnitt durch das Abschlusselement in einer Schnittebene parallel zu derjenigen der Fig. 4;
- Fig. 8: eine perspektivische Ansicht von vorn eines Abschlusselementes gemäß einer zweiten Ausgestaltung;
- Fig. 9: eine perspektivische Ansicht von hinten des Abschlusselements aus Fig. 8;
- Fig. 10: eine fragmentarische perspektivische Ansicht des Abschlusselementes der Fig. 8, einer daran montierten Außenwand und eines daran zu montierenden Verriegelungskörpers, und
- Fig. 11: einen Teilschnitt durch das Abschlusselement, die Außenwand und den Verriegelungskörper der Fig. 10 im zusammengefügten Zustand.

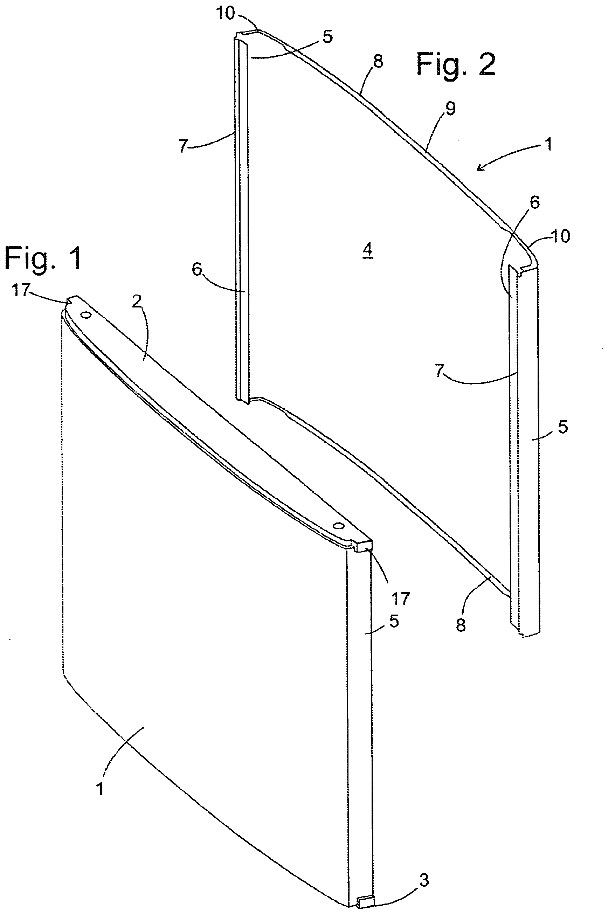

Fig. 1 zeigt in perspektivischer Ansicht eine erfindungsgemäße Tür, die als Tür eines Kühl- oder Gefrierschrankes oder als eine von mehreren Türen eines Kombinations-Kältegerätes dienen kann. Die Tür umfasst in an sich bekannter Weise eine Außenwand 1, die aus einem Blechzuschnitt einstückig geformt ist, ein oberes Abschlusselement 2, ein unteres Abschlusselement 3 und eine in der Ansicht der Fig. 1 nicht sichtbare Innenwand.

Die Außenwand 1 ist in Fig. 2 in einer perspektivischen Ansicht zu sehen, die im Wesentlichen die im montierten Zustand der Tür verborgene Innenfläche der Außenwand 1 zeigt. Die Außenwand ist gegliedert in eine leicht bombierte Frontplatte 4, zwei jeweils seitlich an die Frontplatte 4 anschließende Seitenflanken 5 und zwei von den Seitenflanken 5 aus die Frontplatte 4 hintergreifende Randstege 6. Die Randstege 6 dienen jeweils zur Befestigung der nicht gezeigten Rückwand. Diese ist in an sich bekannter und daher hier nicht im Detail beschriebener Weise aus Kunststoff-Flachmaterial zugeschnitten und durch Tiefziehen geformt.

Zwischen den Seitenflanken 5 und den Randstegen 6 bildet die Außenwand 1 jeweils eine hohle Rippe 7.

An den oberen und unteren Rändern der Außenwand 1 ist jeweils ein Steg 8 in horizontaler Richtung abgewinkelt. Die Breite des Steges 8 ist jeweils in einem mittleren Abschnitt 9 größer als an seinen beiden Enden 10.

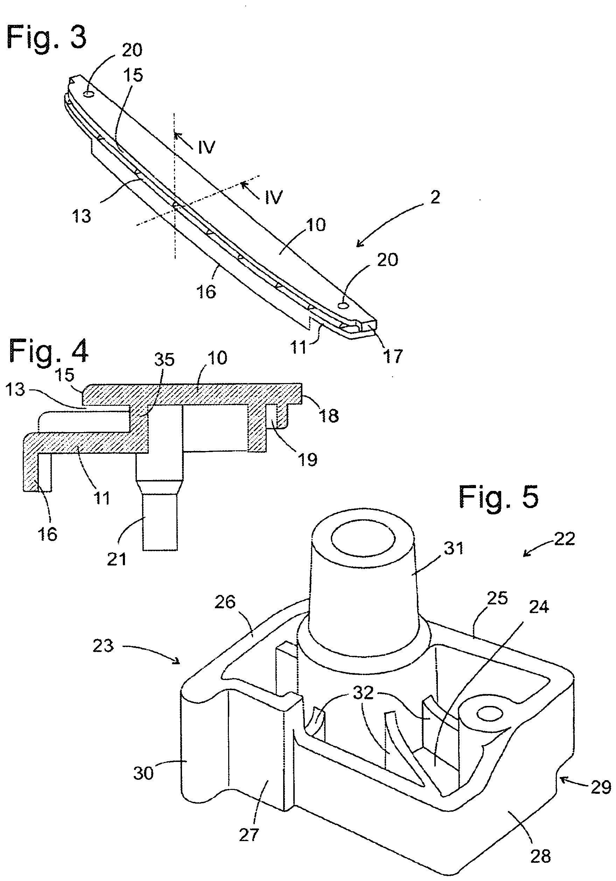

Fig. 3 zeigt in der Perspektive der Fig. 1 das obere Abschlusselement 2 der Tür. Fig. 4 ist ein Schnitt durch das obere Abschlusselement 2 entlang einer in Fig. 3 mit IV-IV bezeichneten Ebene. Das aus Kunststoff spritzgeformte Abschlusselement 2 hat eine flache Grundplatte 11 und eine mit dieser einteilig zusammenhängende und zu ihr parallele zweite Platte 12, die zusammen eine nach vorn offene Nut 13 begrenzt. Die zweite Platte 12 trägt eine Mehrzahl von in die Nut 13 eingreifenden, sich im Wesentlichen in Tiefenrichtung der Nut 13 erstreckenden Rippen 14. Die zweite Platte 12 steht über einen vorderen Rand 15 der Grundplatte 11 über. In einem mittleren Bereich der zweiten Platte 12 ist an deren vorderen Rand ein sich vertikal nach unten erstreckender, entsprechend der Bombierung der Frontplatte 4 leicht gekrümmter Steg 16 angeformt.

Die Nut 13 nimmt im fertig montierten Zustand der Tür den oberen der beiden Stege 8 der Außenwand 1 auf, wobei der Steg 8 zwischen den Rippen 14 und der Grundplatte 11 geklemmt wird. Wenn der Steg 8 ordnungsgemäß in die Nut 13 eingeführt ist, ist die Innenseite der Frontplatte 4 an dem Steg 16 abgestützt. Da der Steg 16 über den vorderen Rand 15 der Grundplatte 11 übersteht, tut die an dem Steg 16 anliegende Frontplatte 4 dies auch, so dass eine reinigungsfreundliche, von Vorsprüngen oder Stufen freie Türvorderseite erhalten wird.

Zwei an den Längsenden des Abschlusselementes 2 abstehende, gewinkelte Laschen 17 sind vorgesehen, um im zusammengebauten Zustand wie in Fig. 1 gezeigt außen an den Seitenflanken 5 anzuliegen und deren Stellung zu fixieren.

Eine sich entlang eines rückwärtigen Randes 18 der Grundplatte 11 erstreckende vertikal orientierte Nut 19 ist vorgesehen, um einen oberen Rand der Innenwand aufzunehmen und zu fixieren.

Zwei in der Fig. 3 sichtbare Öffnungen 20 der Grundplatte gehören zu Lagerbuchsen 21, die vorgesehen sind, um einen nicht dargestellten, an einem die Tür tragenden Gehäuse festen Lagerzapfen drehbar aufzunehmen. Die Lagerbuchsen 21 sind in an sich bekannter Weise an jedem Abschlusselement in spiegelsymmetrischer Anordnung zweimal vorhanden, um eine Montage der Tür an dem Gehäuse wahlweise mit Links- oder mit Rechtsanschlag zu ermöglichen.

Fig. 5 zeigt in perspektivischer Ansicht einen von zwei zueinander spiegelsymmetrischen Verriegelungskörpern 22, die vorgesehen sind, um jeweils nach dem Zusammenfügen des Abschlusselementes 2 mit der Außenwand 1, aber vor der Montage der Innenwand, über die Lagerbuchsen 21 des Abschlusselementes 2 gestülpt zu werden. Der Verriegelungskörper 22 hat eine Basis 23, deren Gestalt einem einseitig offenen Kasten ähnelt, mit einer in etwa viereckigen Bodenplatte 24 und an die Ränder der Bodenplatte 24 anschließenden Seitenwänden 25 bis 28. Im zusammengebauten Zustand berührt die Bodenplatte 24 die Grundplatte 11 des Abschlusselementes 2, die vordere Seitenwand 25 schmiegt sich in Verlängerung des Stegs 16 von innen an die Frontplatte 4 an, wobei eine Aussparung 29 am Fuß der Seitenwand 25 die zweite Platte 12 des Abschlusselementes 2 aufnimmt. Die äußere Seitenwand 26 liegt an der Innenseite einer der Seitenflanken 5 an, und ein Teil der Seitenwand 27 berührt einen der Randstege 6. Ein rippenförmiger Vorsprung 30 zwischen den Seitenwänden 26, 27 greift jeweils in eine der hohlen Rippen 7 der Außenwand 1 ein. Eine Hülse 31 des Verriegelungskörpers 22 umschließt im Wesentlichen spielfrei die Lagerbuchse 21. In Bezug auf die Hülse 31 radial orientierte Rippen 32 verbinden diese mit den Seitenwänden 26, 27, 28.

Die Außenwand 1 und das Abschlusselement 2 können so geformt sein, dass bereits allein durch die Anbringung der Verriegelungskörper 22 an beiden Enden des Abschlusselements 2 die Außenwand unter Spannung gesetzt und gegen den Steg 16 gedrückt gehalten wird. Aufgrund der Krümmung des Stegs 16 legt sich dann die Außenwand 1 über die gesamte Länge des Stegs 16 hinweg dicht an diesen an und wird auch durch den beim Ausschäumen von innen gegen die Frontplatte 4 wirkenden Druck nicht von dem Steg 16 fortgedrängt. Eine solche Zugspannung kann insbesondere dann leicht aufgebaut werden, wenn die Lagerbuchse 21 und die sie aufnehmende Hülse 31 leicht konisch geformt sind. Dadurch wird der Verriegelungskörper 22 umso weiter nach außen und gegen die Seitenflanken 5 getrieben, je weiter er auf die Lagerbuchse aufgeschoben wird.

Es ist jedoch nicht zwingend notwendig, bereits bei der Anbringung des Verriegelungskörpers 22 die Außenwand unter Spannung zu setzen. Selbst wenn zu diesem Zeitpunkt die Außenwand 1 spannungslos bleibt, verhindert die Klemmung der Seitenflanken zwischen den Verriegelungskörpern 22 und den Laschen 17 sowie der Eingriff der Vorsprünge 30 in die hohlen Rippen 7, dass die Außenwand beim Ausschäumen dem von Innen einwirkenden Druck nachgibt. Falls dennoch Schaum zwischen die Frontplatte 4 und den Steg 16 gelangt, kann dieser nicht zwischen dem Steg 8 und der zweiten Platte 12 passieren, so dass die Schaumdichtigkeit dennoch gewährleistet ist.

Ein weiterer Vorteil des Verriegelungskörpers 22 ist, dass er die Lagerbuchse 21 verstärkt, so dass eine belastbare Türaufhängung auch mit einer relativ geringen Wandstärke des Abschlusselementes 2 realisierbar ist.

Das untere Abschlusselement 3 kann, wie in Fig. 1 angedeutet, spiegelbildlich zu dem oberen Abschlusselement 2 ausgebildet sein. In diesem Fall ist vorzugsweise eine der vier Lagerbuchsen 21 der Abschlusselemente 2, 3 an ihrer in den Hohlraum der Tür hineinragenden Spitze offen, um als Einspritzöffnung für ein Kunstharzmaterial zu dienen, das den in dem Hohlraum expandierenden Schaum liefert. Die anderen drei Lagerbuchsen 21, die sich an den am weitesten von der Einspritzstelle entfernten Ecken des Hohlraums befinden, sind dann zweckmäßigerweise an ihrer Spitze jeweils mit einem Entlüftungsventil versehen, welches das Entweichen von Luft, nicht aber von Schaum, aus dem Hohlraum gestattet.

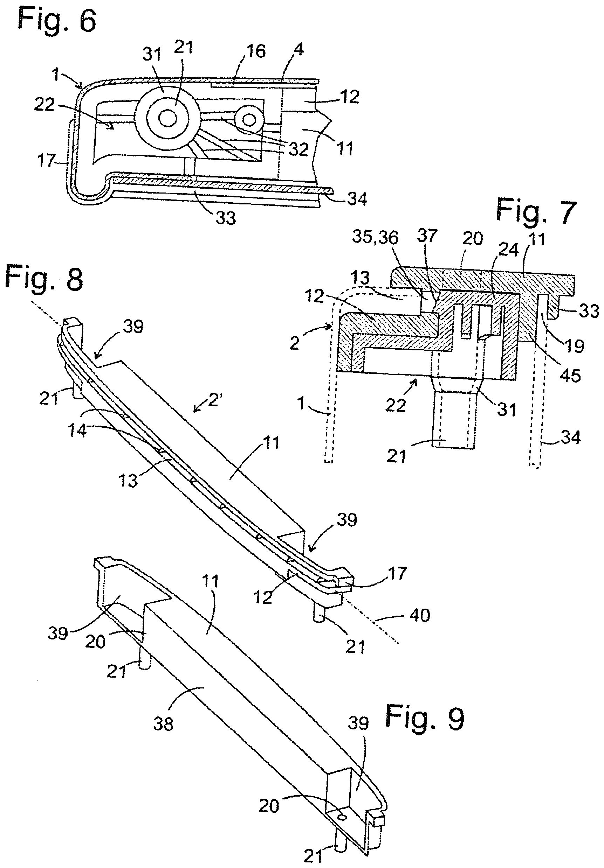

Fig. 6 zeigt einen horizontalen Schnitt durch einen Teil der Tür, wobei einer der Verriegelungskörper 22 in Draufsicht zu sehen ist. Man erkennt die Hülse 31, die von ihr ausgehenden Rippen 32, die Wände 25 bis 28 sowie den eng an die Wände 25, 26, 27 und den Vorsprung 30 angeschmiegten Verlauf der Außenwand 1. Die Lasche 17 ist bei dieser Ausgestaltung, abweichend von der Darstellung der Fig. 3, nach hinten um die hohle Rippe 7 herum verlängert und geht über in eine Rippe 33, die eine äußere Begrenzung der die hier mit 34 bezeichnete Innenwand der Tür aufnehmenden Nut 19 bildet.

Fig. 7 zeigt einen Schnitt durch das Abschlusselement 2 und den daran montierten Verriegelungskörper 22 in einer zur Ebene der Fig. 4 parallelen Ebene. In dieser Ebene bilden die Grundplatte 11, eine die Grundplatte 11 mit der zweiten Platte 12 verbindende vertikale Wand 35 und eine die Nut 19 begrenzende Wand 45 des Abschlusselementes 2 eine Aussparung, in die die Basis 23 des Verriegelungskörpers 22 formschlüssig eingreift. Wenn die Tür fertig zusammengefügt und ausgeschäumt ist, ist der Verriegelungskörper 22 in der Aussparung durch den Isolierschaum fixiert. Eine zusätzliche, auch während des Zusammenbaus der Tür wirksame Fixierung wird durch eine Vertiefung oder ein Fenster 36 in der Wand 35 gebildet, in das ein in Höhe der Aussparung 29 an dem Verriegelungskörper 22 geformter Rastvorsprung 37 eingreift. Durch diesen Rastvorsprung 37 ist der Verriegelungskörper 22, wenn er einmal an dem Abschlusselement 2 montiert ist, unlösbar mit diesem verbunden.

Fig. 8 zeigt eine zweite Ausgestaltung des Abschlusselementes, mit 2' bezeichnet, in einer der Fig. 3 entsprechenden Perspektive; Fig. 9 zeigt die Rückseite des Abschlusselementes 2' in einer der Fig. 2 entsprechenden Perspektive. Einander entsprechende Teile dieses Abschlusselements 2' und des oben beschriebenen Abschlusselementes 2 sind mit den gleichen Bezugszeichen versehen. Wie bei dem Abschlusselement 2 begrenzen eine Grundplatte 11 und eine zweite Platte 12 eine nach vorn offene Nut 13, in die Rippen 14 vorspringen, um darin einen abgewinkelten Steg 8 der Außenwand 1 zu klemmen.

An die Grundplatte 11 ist eine vertikale Rückwand 38 angeformt. In der Rückwand 38 und der Grundplatte 11 sind nach hinten und nach oben offene Ausnehmungen 39 gebildet, die vorgesehen sind, um einen nicht dargestellten, vorn Korpus des Kältegerätes abstehenden Arm aufzunehmen, der an seinem Ende einen in eine Öffnung 20 am Boden der Ausnehmung 39 eingreifenden Lagerzapfen trägt, und den Arm so vor den Blicken eines vor dem Gerät stehenden Betrachters zu verbergen. Wie beim Abschlusselement 2 gehört die Öffnung 20 zu einer ins Innere der Tür vorspringenden Lagerbuchse 21.

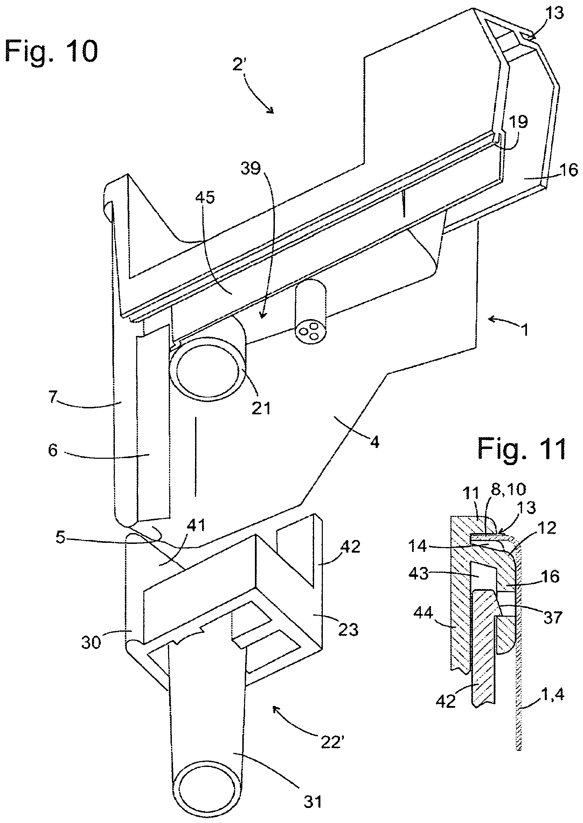

Fig. 10 zeigt eine perspektivische Ansicht von unten eines Teiles des Abschlusselementes 2' mit jeweils einer der Ausnehmungen 39 und der Lagerbuchsen 21 sowie eines Teiles der an dem Abschlusselement 2' befestigten Außenwand 1. Wie mit Bezug auf das Abschlusselement 2 beschrieben, ist die Außenwand 1 an dem Abschlusselement 2' verankert, indem der (in Fig. 10 verdeckte) Steg 8 der Außenwand 1 in die Nut 13 des Abschlusselementes 2' eingreift. Im Gegensatz zum Abschlusselement 2 ist hier jedoch eine Wand 45 des Abschlusselementes 2', die die Innenwand 34 (nicht dargestellt) aufnehmende Nut 19 begrenzt, auf einem kurzen Stück von dem Randsteg 6 der Außenwand 1 hintergriffen. Es ist daher nicht möglich, das Abschlusselement 2' und die Außenwand 1 zusammenzufügen, indem lediglich beide horizontal gegeneinander geschoben und dabei der Steg 8 in die Nut 13 eingeführt wird; stattdessen muss beim Einschieben des Steges 8 in die Rippe 13 das Abschlusselement 2' etwas schräg gehalten sein, so dass der Randsteg 6 die Wand 45 passieren kann, und erst nach Passieren dieser Wand 45 wird das Abschlusselement 2' um eine horizontale Achse 40 (siehe Fig. 8) geschwenkt, so dass ein Ende des Randsteges 6 an der Wand 45 zur Anlage kommt, wie in Fig. 10 gezeigt. Auf diese Weise wird eine erste, provisorische Verankerung der Außenwand 1 an dem Abschlusselement 2' erhalten.

Eine definitive Verankerung wird erhalten, indem ein in Fig. 10 getrennt von der Außenwand 1 und dem Abschlusselement 2' dargestellter Verriegelungskörper 22' auf die Lagerbuchse 21 des Abschlusselementes 2' aufgeschoben wird. Der Aufbau des Verriegelungskörpers 22' gleicht weitgehend dem des Verriegelungskörpers 22 aus Fig. 5, mit dem Unterschied, dass bei dem Verriegelungskörper 22' zwei Zungen 41, 42 über die Bodenplatte der Basis 23 hinaus überstehen, um im montierten Zustand jeweils in einen Spalt zwischen den Wänden der Ausnehmung 39 und der Seitenflanke 5 bzw. der Frontplatte 4 der Außenwand 1 einzugreifen.

Fig. 11 zeigt einen Schnitt durch die Zunge 42 eingreifend in einen Spalt 43 zwischen einer die Aussparung 39 begrenzenden Wand 44 und dem die Frontplatte 4 abstützenden Steg 16. Durch einen Rastvorsprung 37, der in eine Aussparung des Stegs 16 eingreift, ist der Verriegelungskörper 22' unlösbar mit dem Abschlusselement 2' verbunden.

## Patentansprüche

1. Haushaltsgerät, insbesondere Haushaltskältegerät mit einer Tür, die mit einer Außenwand (1), einer Innenwand (34) und einem oberen und einem unteren Abschlusselement (2, 3) ausgestattet ist, die einen inneren Hohlraum der Tür begrenzen, wobei die Außenwand (1) eine Frontplatte (4) und zwei an die Frontplatte (4) angrenzende Seitenflanken (5) der Tür bildet und die Seitenflanken (5) hinter die Frontplatte (4) greifende Randstege (6) tragen, wobei in eine von einer der Seitenflanken (5), einem der Randstege (6) und einem der Abschlusselemente (2, 3) gebildete Ecke des inneren Hohlraums ein Verriegelungskörper (22) eingefügt ist, durch welchen ein Austreten von Schaum zwischen der Außenwand und diesem Abschlusselement sicher vermieden wird, und das Abschlusselement (2, 3) einen Steg (16) trägt, der sich entlang eines horizontalen Randes der Außenwand (1) erstreckt, wobei die Außenwand (1) durch den Verriegelungskörper (22) auf den Steg (16) aufgespannt gehalten ist.

2. Haushaltsgerät nach Anspruch 1, **dadurch gekennzeichnet, dass** der Verriegelungskörper (22) in einer zur Frontplatte (4) parallelen Richtung mit einer Kontur des Abschlusselements (2, 3) formschlüssig zusammengesteckt ist.

3. Haushaltsgerät nach Anspruch 2, **dadurch gekennzeichnet, dass** die Kontur des Abschlusselements (2, 3) eine Türlagerbuchse (21) umfasst, die in eine Hülse (31) des Verriegelungskörpers (22) eingreift.

4. Haushaltsgerät nach Anspruch 3, **dadurch gekennzeichnet, dass** die Türlagerbuchse (21) als Einspritzöffnung zum Einspritzen von Isolationsmaterial in den inneren Hohlraum der Tür dient.

5. Haushaltsgerät nach Anspruch 3, **dadurch gekennzeichnet, dass** in der Türlagerbuchse (21) ein Entlüftungsventil zum Entlüften des inneren Hohlraums der Tür untergebracht ist.

6. Haushaltsgerät nach einem der Ansprüche 2 bis 5, **dadurch gekennzeichnet, dass** die Kontur des Abschlusselements (2, 3; 2') an der Außenwand (1) und der Innenwand (34) anliegende Rippen (16, 35, 45) umfasst, zwischen die der Verriegelungskörper (22) eingreift.

7. Haushaltsgerät nach einem der Ansprüche 2 bis 6, **dadurch gekennzeichnet, dass** der Verriegelungskörper (22) an dem Abschlusselement (2, 3; 2') verrastet ist.

8. Haushaltsgerät nach einem der vorhergehenden Ansprüche, **dadurch gekennzeichnet, dass** die Außenwand (1) entlang wenigstens eines ihrer horizontalen Ränder einen zur Innenwand (34) hin abgewinkelten Steg (8) trägt, und dass das Abschlusselement (2; 2') eine zur Außenseite der Tür hin offene Nut (13) aufweist, in die der Steg (8) eingreift.

9. Haushaltsgerät nach Anspruch 8, **dadurch gekennzeichnet, dass** die Nut (13) breiter ist als der darin eingreifende Steg (8) und dass der Steg (8) an von einer Seitenwand (12) der Nut abstehenden Rippen (14) geklemmt ist.

10. Haushaltsgerät nach Anspruch 8 oder 9, **dadurch gekennzeichnet, dass** ein vorderer Rand (15) des Abschlusselements (2) hinter die Frontseite der Tür zurückspringt.

11. Haushaltsgerät nach einem der vorhergehenden Ansprüche, **dadurch gekennzeichnet, dass** das Abschlusselement (2; 2') zwei außen an den Seitenflanken (5) anliegende Laschen (17) trägt.

12. Haushaltsgerät nach Anspruch 11, **dadurch gekennzeichnet, dass** die Seitenflanke (5) zwischen dem Verriegelungskörper (22) und der Lasche (17) fixiert ist.

13. Haushaltsgerät nach einem der vorhergehenden Ansprüche, **dadurch gekennzeichnet, dass** die Außenwand (1) zwischen Seitenflanke (5) und Randsteg (6) jeweils eine hohle Rippe (7) bildet und dass der Verriegelungskörper (22, 22') einen in den Hohlraum der Rippe (7) eingreifenden Vorsprung (30) aufweist.

## Claims

1. Domestic appliance, especially a household refrigeration appliance with a door, which is equipped with an outer wall (1), an inner wall (34) and an upper and a lower closing element (2, 3) which delimit an inner hollow space of the door, with the outer wall (1) forming a front plate (4) and two side flanks (5) adjoining the front plate (4) and the side flanks (5) carrying edge bars (6) engaging behind the front plate (4), wherein a locking element (22) is inserted into a corner formed by one of the side flanks (5), one of the edge bars (6) and one of the closing elements (2, 3), of the inner hollow space, through which an escape of foam between the outer wall and said closing element is securely avoided and the closing element (2, 3) carries a bar (16) which extends along a horizontal edge of the outer wall (1), wherein the outer wall (1) is held under tension by the locking element (22) on the bar (16).

2. Domestic appliance according to claim 1, **characterised in that** the locking element (22) is joined together in a parallel direction to the front plate (4) with a contour of the closing element (2, 3) to form a positive fit.

3. Domestic appliance according to claim 2, **characterised in that** the contour of the closing element (2, 3) includes a door mounting bush (21) which engages in a sleeve (31) of the locking element (22).

4. Domestic appliance according to claim 3, **characterised in that** the door mounting bush (21) serves as an injection opening for injection of insulation material into the inner hollow space of the door.

5. Domestic appliance according to claim 3, **characterised in that** a venting valve for venting the inner hollow space of the door is accommodated in the door mounting bush (21).

6. Domestic appliance according to one of claims 2 to 5, **characterised in that** the contour of the closing element (2, 3; 2') includes ribs (16, 35, 45) resting against the outer wall (1) and the inner wall (34), between which the locking element (22) engages.

7. Domestic appliance according to one of claims 2 to 6, **characterised in that** the locking element (22) is latched onto the closing element (2, 3; 2').

8. Domestic appliance according to one of the preceding claims, **characterised in that** the outer wall (1) along at least one of its horizontal edges carries a bar (8) angled towards the inner wall (34) and that the closing element (2; 2') features a groove (13) open towards the outer side of the door or, into which the bar (8) engages.

9. Domestic appliance according to claim 8, **characterised in that** the groove (13) is wider than the bar (8) engaging within it and that the bar (8) is clamped on ribs (14) projecting from a side wall (12) of the groove.

10. Domestic appliance according to claim 8 or 9, **characterised in that** a front edge (15) of the closing element (2) springs back behind the front side of the door.

11. Domestic appliance according to one of the preceding claims, **characterised in that** the closing element (2; 2') carries two lugs (17) resting against the outside of the side flanks (5).

12. Domestic appliance according to claimed 11, **characterised in that** the side flank (5) is fixed between the locking element (22) and the lug (17).

13. Domestic appliance according to one of the preceding claims, **characterised in that** the outer wall (1) forms a hollow rib (7) between side flank (5) and edge bar (6) in each case and that the locking elements (22, 22') feature a projection (30) engaging into the hollow space of the rib (7).

## Revendications

1. Appareil électroménager, notamment appareil électroménager frigorifique, comprenant une porte qui est équipée d'une paroi extérieure (1), d'une paroi intérieure (34) et d'un élément terminal supérieur et d'un élément terminal inférieur (2, 3) qui délimitent un espace creux intérieur de la porte, la paroi extérieure (1) formant une plaque frontale (4) et deux flancs latéraux (5) de la porte, adjacents à la plaque frontale (4), et les flancs latéraux (5) portant des listeaux de bordure (6) ayant prise derrière la plaque frontale (4), un corps de verrouillage (22) étant inséré dans un coin, formé par l'un des flancs latéraux (5), par l'un des listeaux de bordure (6) et par l'un des éléments terminaux (2, 3), de l'espace creux intérieur, au moyen duquel un débordement de mousse entre la paroi extérieure et cet élément terminal est évité de manière fiable, et l'élément terminal (2, 3) portant un listel (16) qui s'étend le long d'un bord horizontal de la paroi extérieure (1), et la paroi extérieure (1) étant maintenue de manière tendue sur le listel (16) au moyen du corps de verrouillage (22).

2. Appareil électroménager selon la revendication 1, **caractérisé en ce que** le corps de verrouillage (22) est assemblé par adhérence de forme avec un contour de l'élément terminal (2, 3) dans une direction parallèle à la plaque frontale (4).

3. Appareil électroménager selon la revendication 2, **caractérisé en ce que** le contour de l'élément terminal (2, 3) comprend un coussinet de porte (21) qui a prise dans une douille (31) du corps de verrouillage (22).

4. Appareil électroménager selon la revendication 3, **caractérisé en ce que** le coussinet de porte (21) sert en tant qu'ouverture d'injection pour l'injection de matière isolante dans l'espace creux intérieur de la porte.

5. Appareil électroménager selon la revendication 3, **caractérisé en ce qu'**une soupape d'aération destinée à aérer l'espace creux intérieur de la porte est installée dans le coussinet de porte (21).

6. Appareil électroménager selon l'une quelconque des revendications 2 à 5, **caractérisé en ce que** le contour de l'élément terminal (2, 3 ; 2') comprend des nervures (16, 35, 45) adjacentes à la paroi extérieure (1) et à la paroi intérieure (34), entre lesquelles le corps de verrouillage (22) a prise.

7. Appareil électroménager selon l'une quelconque des revendications 2 à 6, **caractérisé en ce que** le corps de verrouillage (22) est enclenché sur l'élément terminal (2, 3 ; 2').

8. Appareil électroménager selon l'une quelconque des revendications précédentes, **caractérisé en ce que** la paroi extérieure (1) porte le long d'au moins un de ses bords horizontaux un listel (8) plié en direction de la paroi intérieure (34), et **en ce que** l'élément terminal (2 ; 2') présente une rainure (13) ouverte vers le côté extérieur de la porte, dans laquelle rainure le listel (8) a prise.

9. Appareil électroménager selon la revendication 8, **caractérisé en ce que** la rainure (13) est plus large que le listel (8) qui y a prise et **en ce que** le listel (8) est serré sur des nervures (14) dépassant d'une paroi latérale (12) de la rainure.

10. Appareil électroménager selon la revendication 8 ou 9, **caractérisé en ce qu'**un bord avant (15) de l'élément terminal (2) revient derrière le côté frontal de la porte.

11. Appareil électroménager selon l'une quelconque des revendications précédentes, **caractérisé en ce que** l'élément terminal (2 ; 2') porte deux languettes (17) adjacentes aux flancs latéraux (5).

12. Appareil électroménager selon la revendication 11, **caractérisé en ce que** le flanc latéral (5) est fixé entre le corps de verrouillage (22) et la languette (17).

13. Appareil électroménager selon l'une quelconque des revendications précédentes, **caractérisé en ce que** la paroi extérieure (1) forme respectivement une nervure creuse (7) entre le flanc latéral (5) et le listel de bordure (6) et **en ce que** le corps de verrouillage (22, 22') présente une saillie (30) ayant prise dans l'espace creux de la nervure (7).
